# EUROPEAN PATENT APPLICATION

(11) **EP 3 467 545 A1**
(43) Date of publication of application: **10.04.2019**
(21) Application number: 17195031.4
(22) Date of filing: 05.10.2017
(51) Int. Cl.: G01S 17/66, G01S 13/66, G01S 13/93

(54) **OBJECT CLASSIFICATION**

(71) Applicant: Veoneer Sweden AB, 447 83 Vårgårda (SE)
(72) Inventor: Kellner, Dominik, 85221 Dachau (DE); Wernecke, Luise, 80339 München (DE)
(74) Representative: Sandstedt, Jonas Sven James

(57) **Abstract**

The present disclosure relates to a sensor signal processing unit for classifying one or more objects based on sensor signals received from one or more sensors. The sensor signal processing unit comprises an input interface adapted to receive the sensor signals and a control unit adapted to determine an object state associated with each of the one or more objects based on the sensor signals, an object state comprising an object motion state and an object classification. An object classification comprises an object class type and an object existence probability (180). The control unit is arranged to determine at least part of the object classification of a first object based on sensor signals related to the object classification of the first object, and on an existing object state of the first object.

## Description

### TECHNICAL FIELD

The present disclosure relates to a sensor signal processing unit, a sensor arrangement, and a vehicle comprising a sensor arrangement for enhanced object classification.

### BACKGROUND

Today, vehicle environment sensor systems, such as camera systems, radio detection and ranging (radar) systems and light detection and ranging (lidar) systems, can be mounted on a vehicle, often referred to as an ego vehicle, to detect and to track objects in a vicinity of the vehicle. The input from these sensor systems can be used to automate vehicle systems such as speed control and collision prevention. Auto alignment, ego motion estimation, scene understanding, lane keeping assist (LKA) and automated driving (AD) are also enabled by using the sensor system input signals.

Lidar and radar systems are sensor systems arranged to produce output comprising a series of reflection points as measured by radar and lidar sensors. Reflection points can be treated as separate detections or grouped if they relate to the same object. Reflection points or groups of reflection points observed over time can be used to track the motion of an object over time. Such a determination over time is referred to as the track of an object.

Camera systems are sensor systems that present image data comprising a plurality of image pixels representing detected images.

The obtained information, i.e., the sensor signals, confers information of relevant objects, e.g., vehicles, pedestrians, road boundaries etc. Each object state is associated with a motion state. The motion state of an object describes, e.g., the distance from the ego vehicle to the object, a relative or absolute velocity vector of the object in relation to the ego vehicle, and a relative or absolute acceleration vector of the object in relation to the ego vehicle. The motion state of tracked objects is updated continuously to reflect changes in object motion. For instance, acceleration and velocity vectors comprised in the motion state will increase in magnitude if a tracked object brakes or otherwise changes its velocity.

A Kalman filter can be used to update object motion states based on received sensor signals. The object states are then predicted in a prediction step to the next measurement point in time and then updated by the measurement. Alternatives for updating motion states include, e.g., extended Kalman filters, Wiener filters, sequential minimum mean-squared error (MMSE) filters, and particle filters.

For driver assistant systems, it is desirable to classify and characterize all relevant objects around the ego vehicle. Possible object class types include, e.g., other vehicles, pedestrians, lorries, cyclist etc. Object class types may also comprise fixed objects such as road signs, road boundaries, and fixed obstacles in general. Therefore, for each detected object, an object class type is preferably determined. The class type can for example be used to adapt or optimize the tracking algorithm or used to trigger an emergency braking procedure in the ego vehicle.

Further, acquiring an object existence probability is also desirable. The aim here is to know how certain the tracking or sensor fusion algorithm is that a certain object actually exists and that a false alarm or false detection is not present. This object existence probability can for example be used to avoid an emergency brake to avoid colliding with a non-existing object.

US 9239380 B2 discloses a pedestrian collision warning system in which the information about the presence of a pedestrian is based on the information determined by the vehicle camera and, e.g., a millimeter wave radar. US 9239380 discloses fusing sensor input signals from different types of sensors to improve performance of the warning system.

It is, however, desired to provide a sensor signal processing system that is adapted to enhance the determining of object classification.

### SUMMARY

It is an object of the present disclosure to enhance the determining of object classification. Said object is achieved by a sensor signal processing unit for classifying one or more objects based on sensor signals received from one or more sensors. The sensor signal processing unit comprises an input interface adapted to receive the sensor signals and a control unit adapted to determine an object state associated with each of the one or more objects based on the sensor signals. An object state comprises an object motion state and an object classification. An object classification comprises an object class type and an object existence probability. The control unit is arranged to determine at least part of the object classification of a first object based on sensor signals related to the object classification of the first object, and on an existing object state of the first object.

Hereby, determining of object classification is enhanced since additional information related to the classification is extracted from the existing object state of the first object and used in the determining. A more stable and accurate determining of object state is obtained, as will be explained below.

According to some aspects, the sensor signal processing unit is comprised by a sensor arrangement arranged to be mounted to a vehicle. Thus, advantages described herein related to the determining of object classification improves performance of, e.g., speed control and collision prevention systems. Systems such as auto alignment, ego motion estimation, scene understanding, lane keeping assist and automated driving also benefit from the obtained enhancements.

According to one aspect, the control unit is arranged to determine the object existence probability of the first object based on an existing object motion state of the first object.

This way the determining of object existence probability is enhanced since the existing object motion state is accounted for in the determining.

According to another aspect, the control unit is arranged to determine the object existence probability of the first object based on an existing object class type of the first object.

Consequently, the determining of object existence probability is enhanced since information present in the existing object class type is exploited in the determining process.

The sensor signal processing unit, according to an embodiment, comprises a database unit. The control unit is arranged to determine the object existence probability based on existence probability data stored in the database unit corresponding to the existing object class type of the first object.

This is advantageous since existence probability data stored in the database is used to enhance the determining of object existence probability.

According to some aspects, a value of an existence probability measure comprised in a sensor signal associated with the first object is adjusted based on the existing object class type of the first object.

This way sensor input signals comprising a value of an existence probability measure can be refined by using existing information on object class type. It is appreciated that existing sensor systems can be re-used with increased performance due to the disclosed adjustment procedures.

According to other aspects, the control unit is arranged to determine the object class type of the first object based on an existing object motion state of the first object.

Thus, determining of object class type is enhanced by exploitation of existing information on object motion state.

According to further aspects, the control unit is arranged to determine the object class type of the first object based on an existing object existence probability of the first object.

As will be shown by way of example below, the determining of object class type can be refined if existing information on object existence probability is accounted for in the determining.

There is also disclosed herein a method performed by a sensor signal processing unit for classifying one or more objects based on sensor signals received from one or more sensors. The method comprises receiving the sensor signals via an input interface of the sensor signal processing unit, and determining, by a control unit of the sensor signal processing unit, an object state associated with each of the one or more objects based on the sensor signals. The object state comprises an object motion state and an object classification. An object classification comprises an object class type and an object existence probability. The determining comprises determining at least part of the object classification of a first object based on sensor signals related to the object classification of the first object, and on an existing object state of the first object.

Consequently, as was discussed above in connection to the disclosed sensor signal processing unit, determining of object classification is enhanced.

### BRIEF DESCRIPTION OF THE DRAWINGS

The present disclosure will now be described more in detail with reference to the appended drawings, where:
- Figure 1: is a block diagram illustrating an ego vehicle detecting objects by using sensor systems;
- Figure 2: is a block diagram schematically illustrating a sensor signal processing unit and sensor systems;
- Figure 3: is a block diagram schematically illustrating a sensor signal processing unit and sensor systems;
- Figure 4: is a flowchart illustrating methods according to the present disclosure.
- Figure 5: shows a schematic top view of a vehicle and example tracked objects;

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

An ego vehicle is a vehicle carrying sensor systems. The ego vehicle sensor systems detect objects in a vicinity of the ego vehicle. For driver assistant systems it is crucial to identify all relevant objects around the ego vehicle. The type of object is herein referred to as the object class type and is comprised in the object classification part of an objects state. An object class type can be, e.g., car, pedestrian, truck, cyclist, motorcycle, road sign, road boundary, traffic light.

Thus, for each detected object an object class type is preferably determined. The class type can be used, e.g., to adapt and optimize a tracking algorithm or to trigger an emergency braking action. For instance, when using a Kalman filter to track objects over time, the class type can have an impact on the prediction step in the Kalman filtering process.

Some sensor systems generate sensor signals comprising information on an inferred object class type. For example, some camera-based systems comprise a classifier arranged to identify rear ends of vehicles. Such camera systems are then able to generate a sensor signal comprising information about an object's class type. Radar systems are often not able to directly identify the object class type. However, some radar systems are arranged to infer an object class type from measuring a radar cross section (RCS) of a detected object. Other radar systems are arranged to generate a sensor signal comprising a measure of RCS for each detected object. Some sensor systems are configured to calculate or derive an object classification probability, which measures how certain the classification is.

For instance, a camera system may be almost sure that a rear end of a truck is visible, and will in such case report a probability value of say 0.9 on a scale from 0 to 1, or 90% on a scale from 0% to 100%. The same object may also be reported by a radar sensor to be a truck, due to its relatively large RCS, but the radar system may report a lower object classification probability of say, 0.6 on a scale from 0 to 1, or 60% on a scale from 0% to 100%.

It is also possible that a sensor system generates sensor signals comprising multiple object class types for a single object with corresponding probabilities, e.g., 0.8 or 80% probability that it is a vehicle and 0.2 or 20% probability that it is a pedestrian.

An object existence probability is commonly used in object detection and tracking systems. It is comprised in the object classification of an objects state. The aim is to know how certain the system is that the object actually exists and is not a false alarm, radar clutter, or false detection. This object existence probability can be used to, e.g., avoid an unnecessary emergency brake due to a non-existing object.

The existence probability of an object gives an indication about how sure the sensor system and the tracking algorithm is that there is a physical object associated with the object track and not a false-alarm. Some sensor systems are arranged to generate sensor signals that comprise a measure of existence probability or a detection probability / false alarm rate. Detection probability herein refers to a probability that the sensor system is able to reliably detect an object. False alarm rate means the rate a detection is sent from a sensor at a position, where no physical object is present at that position. A further information could be the number of cycles / timespan the object has been seen. The longer an objects detection persists, the more likely it is to correspond to a real physical object and not to a false detection.

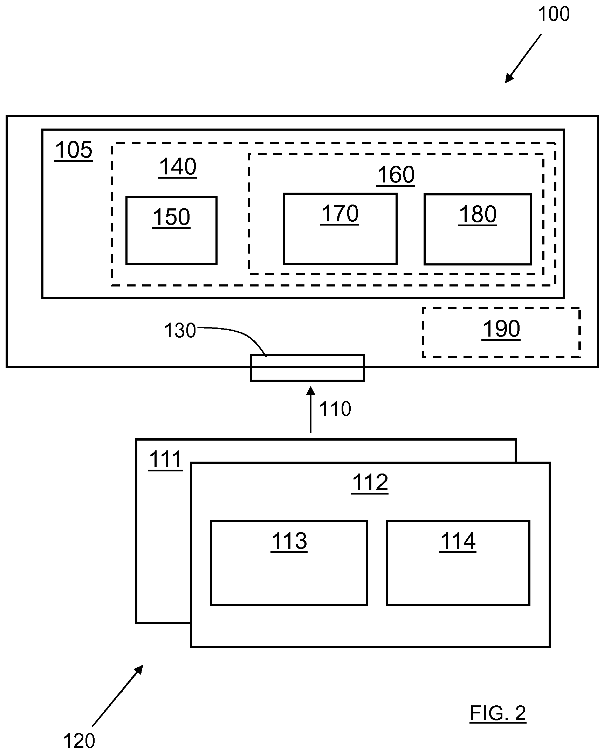

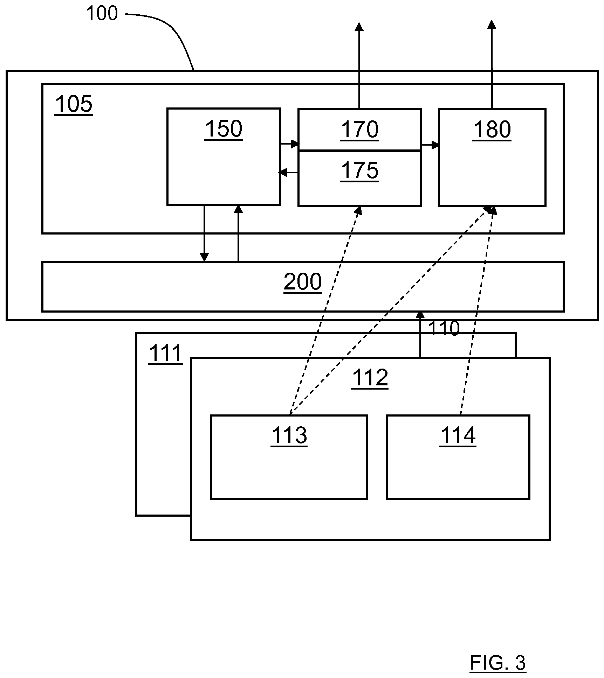

With reference to Figures 2 and 3, there are some different types of sensors 111, 112 used to generate sensor signals 110. Different sensor systems produce information on object class type and object existence probability with varying quality and granularity;

Advanced camera-based sensor systems are often able to generate sensor signals comprising information on both object class type and object existence probability. High resolution radar or laser scanners with class estimation functionality based on motion are also available. These sensor systems are also often able to generate sensor signals comprising information on both object class type and object existence probability. Many sensor systems are arranged to provide information on object existence probability, provided that an object existence probability determining module is comprised in the sensor system. Low cost sensor systems, in general, do not provide refined information on class type and existence probability.

A tracking filter, e.g., a Kalman filter, maintains tracks associated with detected objects based on sensor signals received from the sensor systems. Each object track is associated with an object state. The object state comprises an object motion state which describes a set of physical parameters related to the tracked object. For instance, object motion state may comprise a position in relative or absolute coordinates, a heading vector, a velocity vector, and an acceleration vector.

This motion state is continuously updated as sensor signals related to the motion state are received by the tracking algorithm. The tracking filter may, according to some aspects, also maintain and update an object classification for each track. The tracking algorithm, or tracking filter, may be denoted a sensor fusion algorithm, in that it is able to receive information from several different sensor systems and other sources and fuse this information into a single object state describing the behavior of a tracked object over time. Herein, the terms sensor fusion system, fusion, tracking filter, and tracking algorithm will be used interchangeably.

In prior art approaches, an object existence probability, an object class type and an object motion state are estimated or determined independently of each other. This has the disadvantage that the class type and the motion state of an object cannot be used to improve the determination of existence probability for the same object. This also has the disadvantage that the existence probability and motion state of an object cannot be used to improve the determination of class type for the same object. Furthermore, in scenarios where sensor systems are not able to generate sensor signals comprising information on, e.g., existence probability, such information will be unknown in the object state, which is a disadvantage in the prior art.

Sensor fusion systems according to prior art combine detection information from multiple sensors. The sensor systems provide these detections, or sensor signals, at the same time instant (triggered, synchronous) or at different time instants (non-triggered, asynchronous). However, sensor inputs related to determining class type are fused in one process, and sensor inputs related to determining object existence probability are fused in another separate process.

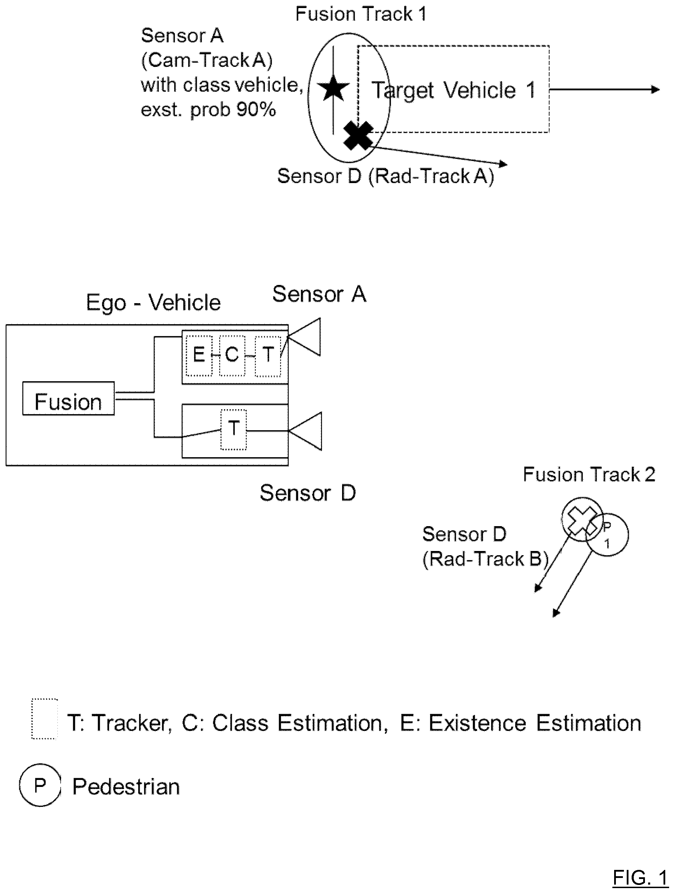

Consider the following example which serves to illustrate aspects of prior art sensor fusion systems, with reference to Figure 1.

A camera-based sensor system, sensor A, sees target vehicle 1 (Cam-Track A) and generates a sensor signal that is received by the fusion system of the ego vehicle. The fusion or tracking algorithm stores this information as fusion track 1.

A radar-based sensor system, sensor D, sees the same vehicle (Rad-Track A) but also sees a pedestrian (Rad-Track B). The radar-based sensor system generates a sensor signal comprising both object detections which is received by the fusion system.

The fusion system now associates Rad-Track A with fusion track 1 and combines sensor signals related to fusion track 1, e.g. longitudinal position and velocity from the radar-based sensor system with lateral position and velocity from the camera-based sensor system. The fusion system also sets up a new track, fusion track 2, for the detection Rad-Track B.

The camera-based sensor system, Sensor A, provides with Cam-Track A an object class type of vehicle and an object existence probability of 90%, so that these values are associated with the object state of fusion track 1. Since the radar-based sensor system, Sensor D, generates no sensor signal output directly related to object class type nor directly related to object existence probability it does not affect these properties of the object state of fusion track 1 according to prior art. For fusion track 2, these properties of the object state are unknown in the prior art. It is a disadvantage of the prior art that object state properties are incomplete. It is another disadvantage that object state properties are not derived in the most accurate manner possible, as will be discussed below in connection to a discussion of advantages associated with the present inventive concept.

Suppose now instead sensor D is a high-resolution radar, which is configured to identify or otherwise determine object class type and comprises an existence probability determination module for determining object existence probability. After the association for fusion track 1, object class type and object existence probability are updated. E.g., the radar-based sensor system provides an object class determined as vehicle and an object existence probability determined as 95%, so that the existence probability would increase from 90% (camera only) to e.g. 97% as we are now more certain than with radar only, since camera has seen the object as well. The object class type would only be confirmed in this case. If it would differ, e.g., if the radar-based sensor system identifies a pedestrian while the camera-based sensor system identifies a vehicle, fusion would need a strategy to combine the varying class type. A solution could be to trust the camera-based sensor systems more and keep the vehicle classification, but reducing class probability by an amount. In this way, according to prior art, sensor signals are fused in one process for object type, and another separate process for object existence probability.

Instead of determining object class type and object existence probability separately and directly from sensor signal input, as is known in the prior art, and was exemplified above in connection to Figure 1, a new approach will be described. Object class type and object existence probability are, according to some aspects of the present disclosure, derived by including the object motion state of a tracked object and combining the class type and existence probability determination into a joint determination of object state comprising motion state, object class type, and object existence probability.

Beside the information provided by sensor systems discussed above, information from sensor fusion, i.e., from the tracking algorithm, is used to adapt and/or to correct sensor system signal input related to object class type and object existence probability. For sensor systems which do not provide any information about class type and existence probability, both values can be estimated by using existing information, as will be made clear by illustrative examples below.

With reference to Figure 2, there is disclosed a sensor signal processing unit 100 for classifying one or more objects based on sensor signals 110 received from one or more sensors 120. The sensor signal processing unit comprises an input interface 130 adapted to receive the sensor signals and a control unit 105 adapted to determine an object state 140 associated with each of the one or more objects based on the sensor signals. Sensors like 112 may provide a class type value 113 and/or existence probability value 114 for each object or no additional information. An object state 140 herein comprises an object motion state 150 and an object classification 160. An object classification 160 comprises an object class type 170 and an object existence probability 180. The control unit 105 is arranged to determine the object classification 160 of a first object based on sensor signals 110 related to the object classification of the first object, and on an existing object state of the first object.

Thus, advantageously, an object classification, i.e., object class type and object existence probability, is determined more accurately and/or more robustly than in methods disclosed in the prior art, since more information is used in the determining.

Also, advantageously, an object class type of a detected object can be determined even in cases where no sensor signal is received that comprises direct information about such object class type.

Furthermore, advantageously, an object existence probability of a detected object can be determined even in cases where no sensor signal is received that comprises direct information about such object existence probability.

Another advantage of the disclosed sensor signal processing unit is that it can enhance operation using existing sensor input signals. This way, a sensor arrangement comprising sensors and the sensor signal processing unit may re-use existing sensor input signals, without alteration or modification.

It is appreciated that the determining of a first measure, value, or quantity based on a second measure, value or quantity herein means that the second measure, value, or quantity is used at least in part to calculate, estimate, or otherwise determine the first measure, value, or quantity.

For example, a probability value may be analytically derived conditioned on knowledge of another probability value. For instance, for independent events, a conditional probability can be derived using Bayes rule or using a product of separate independent probabilities.

As another example, 'determining based on' may comprise adjusting the first measure, value, or quantity by an amount specified by a pre-defined function or table using the second measure, value, or quantity as argument or index to the function or table. The pre-defined function or table may be constructed from experimentation, from computer simulation, or it can be analytically derived.

Yet another example of the 'determining based on' comprises assigning a pre-defined measure, value, or quantity chosen based on the second measure, value or quantity. For instance, a class type of 'vehicle' may imply that a corresponding existence probability is set to 80%, while a class type of pedestrian implies that the same existence probability is set to 60%, again based on a table or other form of database structure.

Further examples of determining a given measure, value, or quantity based on another measure, value, or quantity will be given below.

Regarding the sensor signals discussed herein, according to some aspects, with reference to Figure 2, one or more of the received sensor signals 110 comprises detection information associated with a first object, the detection information comprising any of; position coordinates relative to a sensor, position coordinates in an absolute coordinate system, a velocity vector, an acceleration vector, a bearing relative to a sensor, a heading.

According to some other aspects, again with reference to Figure 2, one or more of the received sensor signals comprise information related to an object class type 113 of the first object.

According to some further aspects, with reference to Figure 2, one or more of the received sensor signals comprise information related to an object existence probability 114 of the first object.

We now provide several non-limiting examples to further illustrate the proposed principles and associated advantages of the inventive concepts described herein.

**Example 1:** Based on an object class type from an existing object state, the corresponding existence probability of the object can be adjusted for increased accuracy and reliability by the sensor signal processing unit disclosed herein. Suppose, e.g., that a radar-based sensor system has a high detection probability for vehicles, but cannot determine class type, i.e., is not able to generate a sensor signal comprising class type information, only existence probability. Suppose that the sensor signal processing unit can estimate or otherwise determine the class type (e.g. by using a camera-based sensor system). If a given object is not seen by the radar-based sensor system within its field of view (FOV), it is likely that a false-alarm was generated by the camera and that there is no physical object. The object existence probability in the object state is then adjusted (decreased) by an amount. Of course, if the object is located outside the field of view of some sensor, then said adjustment is not carried out. In contrast, radar-based sensor systems are sometimes not able to detect pedestrians due to the low RCS of pedestrians, especially at long range, so in this case the existence probability should not be decreased as in the case before. Thus, if a camera-based system sees a pedestrian which the radar-based system does not see, the existence probability is maintained or decreased by a smaller amount compared to above. According to this example, the determined existence probability is enhanced to be more accurate.

According to an embodiment, the sensor signal processing unit 100 disclosed herein comprises a control unit 105 which is arranged to determine the object existence probability 180 of a first object based on an existing object class type 170 of the first object.

Thus, advantageously, an object existence probability is determined more accurately and/or more robustly than in methods disclosed in the prior art, since additional information is used in the determining.

**Example 2:** Based on an object motion state from an existing object state, the corresponding object existence probability can be adjusted by the sensor signal processing unit disclosed herein. Suppose that a mono camera is not able to detect crossing vehicles with high accuracy, due to that there is no classifier for crossing vehicles. If a radar-based sensor system has seen an object, but the camera-based sensor system not, with prior art approaches the existence probability would be decreased. However, knowing the present object motion state to be 'crossing', this decrease in existence probability can be avoided, since the detection probability of the camera can be set to a very small value for the specific motion state of crossing vehicles. In other words, the specific mono camera not detecting the object is not unexpected, but rather strengthens the hypothesis that the detected object is a crossing vehicle.

The sensor signal processing unit 100, according to some aspects, comprises a control unit 105 which is arranged to determine an object existence probability 180 of a first object based on an existing object motion state 150 of the first object.

Again, advantageously, an object existence probability is determined more accurately and/or more robustly than in methods disclosed in the prior art, since more information is used in the determining.

**Example 3:** Based on a motion state from an existing object state, the class type and/or class type probabilities can be adjusted by the sensor signal processing unit. Suppose in this example that a fusion or tracking algorithm determines that an object now has accelerated to a velocity of 80 kilometers per hour. This specific value for velocity falls within a range of motion states that is unlikely to comprise pedestrians and cyclists. Hence, the object class type should be updated or, alternatively, the object class probabilities should be adjusted by an amount.

The sensor signal processing unit 100, according to some aspects, comprises a control unit 105 which is arranged to determine the object class type 170 of a first object based on an existing object motion state 150 of the first object.

Advantageously, an object class type is determined more accurately and/or more robustly than in methods disclosed in the prior art, since more information is used in the determining.

**Example 4:** An object class type in an existing object state is, e.g., a vehicle from a previous camera measurement. A radar-based sensor provides a new measurement with low RCS close to the object. Low RCS would have the effect that the radar-based sensor would generate a sensor signal comprising a low detection rate / high false alarm rate for this object. But since fusion knows that the object is a vehicle, the reported detection rate can be maintained or even increased.

Hence, a value of an existence probability measure comprised in a sensor signal associated with a first object is adjusted based on an existing object class type 170 of the first object.

Advantageously, an object classification is determined more accurately and/or more robustly than in methods disclosed in the prior art, since more information is used in the determining.

**Example 5:** A database or look-up-table can be used to calculate an object existence probability, by means of a sensor signal processing unit, for an object seen by a sensor system which does not provide any information about the existence probability. Either the sensor provides a class type 113 in its sensor signal which can be used to index the database or look-up table, or the class type of the associated object 170 comprised in an existing object state is used as input for the look-up table or database.

For example, suppose a camera-based sensor has been extensively experimented with to determine a set of values of detection probability as function of object class types, different detection ranges, detection angles, velocities and acceleration vectors, and the like. If now a detection of a first object is generated by the camera-based sensor system with object class type vehicle (from another sensor system or from fusion) and/or known motion state (from another sensor system or from fusion) the detection rate / false alarm probability and or object existence probability can be obtained from the database using an existing object state of the first object.

Thus, according to some aspects, the sensor signal processing unit 100 comprises a control unit 105 which is arranged to determine the object existence probability 180 of an object based on existence probability data stored in a database unit corresponding to the existing object class type of the first object.

Advantageously, an object existence probability of a detected object can be determined even in cases where no sensor signal is received that comprises direct information about such object existence probability.

**Example 6:** Suppose a sensor system, such as a radar-based sensor system, generates a sensor signal comprising information on object existence probability, but no information on object class type. A fusion system may then associate low existence probabilities with class types corresponding to smaller RCS, and higher existence probabilities with class types corresponding to larger RCS. For instance, a small RCS detection is more likely to be a pedestrian than it is to be a larger truck.

Thus, there is also disclosed herein a sensor signal processing unit 100 with a control unit 105 arranged to determine an object class type 170 of a first object based on an existing object existence probability 180 of the first object.

Thus, advantageously, object classification is determined more accurately and/or more robustly than in methods disclosed in the prior art, since more information is used in the determining.

Also, advantageously, an object class type of a detected object can be determined even in cases where no sensor signal is received that comprises direct information about such object class type.

Figure 3 shows a block diagram schematically illustrating a sensor arrangement comprising a sensor signal processing unit and sensor systems. Figure 3 illustrates a sensor system 112 configured to generate a sensor signal comprising information on object class type 113, and on object existence probability 114. These sensor signals are received by corresponding object class type 170 and object existence probability 180 modules of the control unit 105.

The object class type module here further comprises an object class type probability module 175. With such a module, hard decisions on objects class type are not determined. Rather, a probability is assigned to each object class type out of a predetermined set of object class types. The most likely object class type for a given object is then assigned a relatively high probability, while the more unlikely object class types associated with the object are assigned relatively low probability values. Probability values, as previously, can be specified using percentages, with 100% being a totally certain value, or on a scale from 0 to 1, where 1 represents total certainty.

Figure 3 also shows a sensor signal fusion stage 200 arranged to receive the sensor signals and to apply a fusion algorithm known in the art to sensor signals before presenting the tracking filter with the fused information.

Figure 3 furthermore illustrates the connection between object motion state 150, object class type 170, 175, and object existence probability 180 by connecting arrows. These arrows serve to illustrate the inventive concepts described herein.

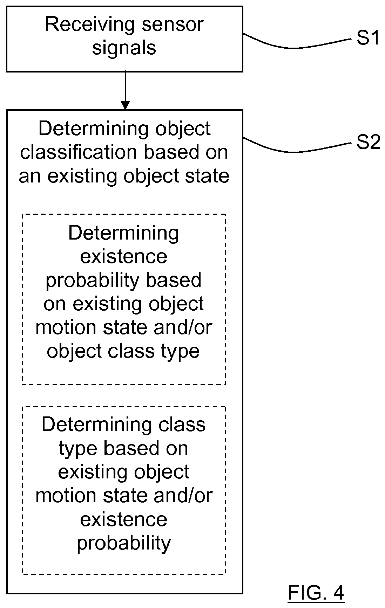

Figure 4 shows a flowchart illustrating methods according to the present disclosure.

Figure 4 illustrates a method performed by a sensor signal processing unit for classifying one or more objects based on sensor signals received from one or more sensors. The method comprises receiving S1 the sensor signals via an input interface of the sensor signal processing unit, and determining S2, by a control unit of the sensor signal processing unit, an object state associated with each of the one or more objects based on the sensor signals, the object state comprising an object motion state and an object classification, an object classification comprising an object class type and an object existence probability. The determining comprises determining at least part of the object classification of a first object based on sensor signals related to the object classification of the first object, and on an existing object state of the first object.

According to some aspects, the determining comprises determining the object existence probability of the first object based on an existing object motion state of the first object and/or based on an existing object class type of the first object.

According to some other aspects, the determining comprises determining the object class type of the first object based on an existing object motion state of the first object and/or based on an existing object existence probability of the first object.

The implementation and function of the sensor signal processing unit was described above in connection to, e.g., Figures 2 and 3. Examples 1 through 6 which were discussed above exemplifies aspects of the disclosed methods.

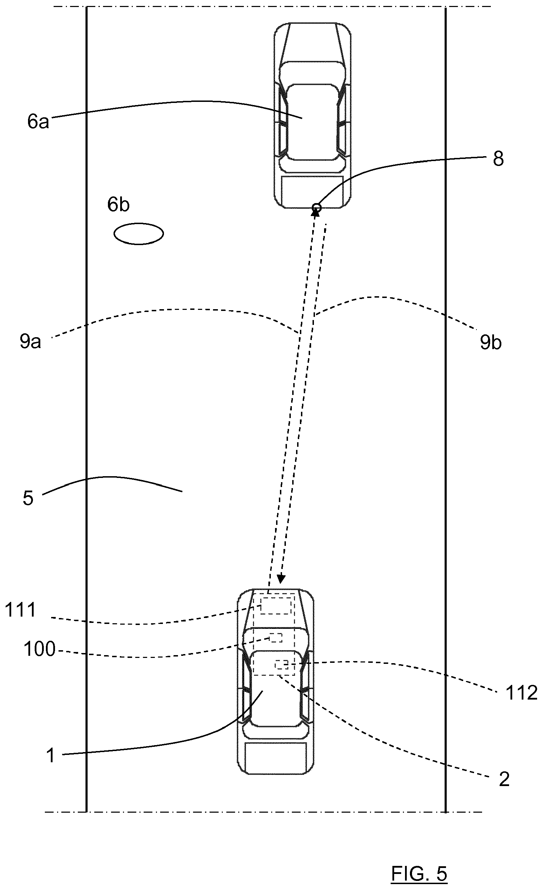

With reference to Figure 5, showing a top view of an ego vehicle 1, the ego vehicle 1 comprises a sensor arrangement 2. The sensor arrangement 2 in turn comprises one or more sensor signal processing units 100 as discussed above and one or more sensor systems 111, 112.

The sensor systems may comprise, e.g., a radar-based sensor system, a lidar-based sensor system, and a camera-based sensor system.

The radar-based sensor system, the lidar-based sensor system, and the camera-based sensor system are arranged to acquire measurement data by means of measurements, and acquired sensor data is handled by means of the control unit in the sensor signal processing unit.

In Figure 5, the ego vehicle 1 is travelling on a road 5 behind a first object 6a, a vehicle, and a second object 6b, a pedestrian. The radar-based sensor system is arranged to obtain radar object measurement data by detecting radar detections 8 by means of transmitted radar signals 9a and received radar signals 9b. The camera sensor device is arranged to obtain camera object measurement data in the form of image data as discussed above.

The sensor signal processing unit 100 is arranged to track the target objects 6a, 6b such that motion states of the target objects 6a, 6b can be determined by means of obtained object measurement data from the radar sensor arrangement and the camera sensor device. For this purpose, the sensor signal processing unit is adapted to run a suitable tracking algorithm in a previously well-known manner.

A tracking filter, such as for example a Kalman Filter, is used in a fusion process that is arranged to maintain target objects 6a, 6b which have been detected recently. Their motion state, position, heading, velocity and acceleration, is estimated and updated by measurements from the sensors 111, 112.

To identify the target objects 6a, 6b, which generally are constituted by objects around the ego vehicle such as other vehicles, pedestrians, lorries, cyclist etc., the sensor signal processing unit 100 is adapted to determine an object class type for each one of the target objects 6a, 6b and is for example used to adapt the tracking algorithm or trigger an emergency system such as emergency braking.

In order to verify that a certain object exists and that a false alarm is not present, the sensor signal processing unit 100 is adapted to determine an object existence probability associated with each track or detected object. The aim is to determine how certain the tracking algorithm is that an object corresponds to a physical obstacle and not to clutter, false alarm, or otherwise erroneous detection. The object existence probability can for example be used to avoid an emergency brake due to a non-existing object.

Previously, in the prior art, the class type and existence probability have been calculated independently and direct using relevant sensor input.

According to the present disclosure, the sensor signal processing unit 100 is able to classify one or more objects 6a, 6b based on sensor signals received from the one or more sensors 111, 112. The sensor signal processing unit comprises an input interface adapted to receive the sensor signals and a control unit, not shown in Figure 5, adapted to determine an object state associated with each of the one or more objects based on the sensor signals. The object state comprises an object motion state and an object classification. An object classification, in turn, comprises an object class type and an object existence probability. The control unit is arranged to determine the object classification of a first object based on sensor signals related to the object classification of the first object, and on an existing object state of the first object.

This means that the control unit is arranged to perform classification estimation over all frames, for example for the target vehicle 6a, and according to some aspects to also estimate a corresponding object class type probability. Further, the control unit is arranged to perform an existence probability estimation over all frames, which according to some aspects is updated from sensor detection probability/false alarm rate, or directly with an existence probability.

The present disclosure is not limited to the examples above, but may vary freely within the scope of the appended claims.

All calculations, processes etc. are assumed to be performed by means of the sensor signal processing unit. Generally, a control unit can be comprised by one or more separate or integrated control units.

To summarize, according to some aspects of the present disclosure, a fusion system, such as the fusion system of the ego vehicle illustrated in Figure 5, receives sensor signals from one or multiple sensor systems (e.g. camera, radar, lidar, etc.) and determines an object existence probability associated with detected objects in a way that it uses an estimate or determination of the class type and/or the motion state of these objects.

According to some aspects, the object motion state and object class type are used to determine the existence probability, or to adjust the sensor signal information on object existence probability provided by the sensors.

According to some other aspects of the present disclosure, a fusion system, such as the fusion system of the ego vehicle illustrated in Figure 5, receives sensor signals from one or multiple sensor systems (e.g. camera, radar, lidar, etc.) and determines an object class type associated with detected objects in a way that it uses an estimate or determination of the object existence probability and/or the motion state of these objects.

According to some aspects, the object motion state and object existence probabilities are used to determine the object class type, or to adjust the sensor signal information on object class type provided by the sensors.

According to some further aspects, the motion state (e.g. the heading, velocity etc.) is used to determine the class type and/or class type probabilities, and/or object existence probability. Here, the motion state of an object (e.g. heading vector, velocity vector, etc.) is used to increase / decrease determined values as provided by sensor systems.

According to some further aspects, the motion state (e.g. heading, velocity, position, etc.) is used to determine an object existence probability, when such information is not comprised in received sensor signals.

According to other aspects, a database with experimental data can be used to determine class type and/or object existence probability based on the detection or non-detection of the object by a sensor.

For example, a database of different class types with corresponding motion states and/or existence probabilities can be constructed.

For example, a database of different existence probabilities with corresponding motion states and/or class types can be constructed.

Using such databases built from experimental data or from other sources, information on, e.g., class type can be translated into a likely existence probability. Also, for example, information on, e.g., existence probability can be translated into a likely class type.

According to further aspects, the sensor specifies and sends information about its capability to detect objects from a certain class type and/or range of motion states to the fusion system. The fusion system may then associate certain motion states with specific values of object existence probabilities, and/or associate certain object class types with specific values of object existence probabilities.

Generally, the present disclosure relates to a sensor signal processing unit 100 for classifying one or more objects based on sensor signals 110 received from one or more sensors 120, the sensor signal processing unit comprising an input interface 130 adapted to receive the sensor signals and a control unit 105 adapted to determine an object state associated with each of the one or more objects based on the sensor signals, an object state comprising an object motion state 150 and an object classification 160, an object classification comprising an object class type 170 and an object existence probability 180. The control unit 105 is arranged to determine at least part of the object classification 160 of a first object based on sensor signals 110 related to the object classification of the first object, and on an existing object state of the first object.

According to some aspects, the control unit is arranged to determine the object existence probability 180 of the first object based on an existing object motion state 150 of the first object.

According to some aspects, the control unit is arranged to determine the object existence probability 180 of the first object based on an existing object class type 170 of the first object.

According to some aspects, the sensor signal processing unit 100 comprises a database unit 190. The control unit 105 is arranged to determine the object existence probability 180 based on existence probability data stored in the database unit corresponding to the existing object class type of the first object.

According to some aspects, a value of an existence probability measure comprised in a sensor signal associated with the first object is adjusted based on the existing object class type 170 of the first object.

According to some aspects, the control unit is arranged to determine the object class type 170 of the first object based on an existing object motion state 150 of the first object.

According to some aspects, the control unit is arranged to determine the object class type 170 of the first object based on an existing object existence probability 180 of the first object.

According to some aspects, one or more of the received sensor signals 110 comprising detection information associated with the first object, the detection information comprising any of; position coordinates relative to a sensor, position coordinates in an absolute coordinate system, a velocity vector, an acceleration vector, a bearing relative to a sensor, a heading.

According to some aspects, one or more of the received sensor signals comprise information related to an object class type of the first object.

According to some aspects, one or more of the received sensor signals comprise information related to an object existence probability of the first object.

The present disclosure also relates to a method performed by a sensor signal processing unit for classifying one or more objects based on sensor signals received from one or more sensors. The method comprises receiving S1 the sensor signals via an input interface of the sensor signal processing unit, and determining S2, by a control unit of the sensor signal processing unit, an object state associated with each of the one or more objects based on the sensor signals, the object state comprising an object motion state and an object classification, an object classification comprising an object class type and an object existence probability. The determining comprises determining at least part of the object classification of a first object based on sensor signals related to the object classification of the first object, and on an existing object state of the first object.

According to some aspects, the determining comprises determining the object existence probability of the first object based on an existing object motion state of the first object and/or based on an existing object class type of the first object.

According to some aspects, the determining comprises determining the object class type of the first object based on an existing object motion state of the first object and/or based on an existing object existence probability of the first object.

Some of the various example embodiments described herein, in particular related to the sensor signal processing units, are described in the general context of functional units, method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory, ROM, Random Access Memory, RAM, compact discs, CDs, digital versatile discs, DVDs, etc. Generally, program modules may include routines, programs, objects, components, data structures, etc. that performs particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

According to some aspects, the disclosed sensor signal processing unit comprises processing circuitry. The processing circuitry may be any suitable type of computation unit, e.g. a microprocessor, digital signal processor, DSP, field programmable gate array, FPGA, or application specific integrated circuit, ASIC, or any other form of circuitry. It should be appreciated that the processing circuitry need not be provided as a single unit but may be provided as any number of units or circuitry.

## Claims

1. A sensor signal processing unit (100) for classifying one or more objects based on sensor signals (110) received from one or more sensors (120), the sensor signal processing unit comprising an input interface (130), adapted to receive the sensor signals, and a control unit (105) adapted to determine an object state associated with each of the one or more objects based on the sensor signals, an object state comprising an object motion state (150) and an object classification (160), an object classification comprising an object class type (170) and an object existence probability (180), **characterized in that** the control unit (105) is arranged to determine at least part of the object classification (160) of a first object based on sensor signals (110) related to the object classification of the first object, and on an existing object state of the first object.

2. The sensor signal processing unit (100) according to claim 1, wherein the control unit is arranged to determine the object existence probability (180) of the first object based on an existing object motion state (150) of the first object.

3. The sensor signal processing unit (100) according to claim 1, wherein the control unit is arranged to determine the object existence probability (180) of the first object based on an existing object class type (170) of the first object.

4. The sensor signal processing unit (100) according to claim 3, comprising a database unit (190), wherein the control unit (105) is arranged to determine the object existence probability (180) based on existence probability data stored in the database unit corresponding to the existing object class type of the first object.

5. The sensor signal processing unit according to claim 3 or 4, wherein a value of an existence probability measure comprised in a sensor signal associated with the first object is adjusted based on the existing object class type (170) of the first object.

6. The sensor signal processing unit (100) according to any previous claim, wherein the control unit is arranged to determine the object class type (170) of the first object based on an existing object motion state (150) of the first object.

7. The sensor signal processing unit (100) according to any previous claim, wherein the control unit is arranged to determine the object class type (170) of the first object based on an existing object existence probability (180) of the first object.

8. The sensor signal processing unit (100) according to any previous claim, one or more of the received sensor signals (110) comprising detection information associated with the first object, the detection information comprising any of; position coordinates relative to a sensor, position coordinates in an absolute coordinate system, a velocity vector, an acceleration vector, a bearing relative to a sensor, a heading.

9. The sensor signal processing unit (100) according to any previous claim, wherein one or more of the received sensor signals comprise information related to an object class type of the first object.

10. The sensor signal processing unit (100) according to any previous claim, wherein one or more of the received sensor signals comprise information related to an object existence probability of the first object.

11. A sensor arrangement (2) comprising a sensor signal processing unit according to any previous claim, and one or more sensors configured to transmit the sensor signals to the sensor signal processing unit.

12. A vehicle (1) comprising a sensor arrangement according to claim 11.

13. A method performed by a sensor signal processing unit for classifying one or more objects based on sensor signals received from one or more sensors, comprising;
receiving (S1) the sensor signals via an input interface of the sensor signal processing unit,
determining (S2), by a control unit of the sensor signal processing unit, an object state associated with each of the one or more objects based on the sensor signals, the object state comprising an object motion state and an object classification, an object classification comprising an object class type and an object existence probability,
**characterized in that** the determining (S2) comprises determining at least part of the object classification of a first object based on sensor signals related to the object classification of the first object, and on an existing object state of the first object.

14. The method according to claim 13, wherein the
determining (S2) comprises determining the object existence probability of the first object based on an existing object motion state of the first object and/or based on an existing object class type of the first object.

15. The method according to claim 13 or 14, wherein the
determining (S2) comprises determining the object class type of the first object based on an existing object motion state of the first object and/or based on an existing object existence probability of the first object.
